(19) Europäisches Patentamt

European Patent Office

Office européen des brevets

(11) **EP 1 137 223 A1**

(12) **EUROPEAN PATENT APPLICATION**

(43) Date of publication:
26.09.2001 Bulletin 2001/39

(51) Int Cl.⁷: $H04L\ 12/56$

(21) Application number: 00302444.5

(22) Date of filing: 24.03.2000

(84) Designated Contracting States:
**AT BE CH CY DE DK ES FI FR GB GR IE IT LI LU MC NL PT SE**
Designated Extension States:
**AL LT LV MK RO SI**

(71) Applicant: **BRITISH TELECOMMUNICATIONS public limited company**
**London EC1A 7AJ (GB)**

(72) Inventor: **The designation of the inventor has not yet been filed**

(74) Representative: **Nash, Roger William et al**
**BT Group Legal Services,**
**Intellectual Property Department,**
**Holborn Centre, 8th Floor,**
**120 Holborn**
**London EC1N 2TE (GB)**

(54) **Datagram network**

(57)     A method of operating a datagram network is disclosed. According to the method, one or more nodes within the datagram network are arranged to distinguish between datagrams that are precursors to the introduction of a new flow to the network and datagrams that belong to a flow that has already been introduced to the network. Network nodes discard or delay the former type of datagrams at the onset of congestion within the network, thereby providing a datagram network that offers congestion control without damaging the quality of service received by flows already present in the network. The method is applicable both to flows that simply represent a response to a request - a feature of many of the client-server interactions that take place over the Internet - and also to flows set up across transport layer connections.

**Figure 3**

**Description**

The present invention relates to a method of operating a datagram network.

For many years, communication equipment suppliers and communication network operators have been attempting to develop a unified telecommunications network that can be used for telephony, computer data transfer and the transfer of video signals. Such a network is often referred to as the broadband integrated services digital network or B-ISDN.

One line of technological advancement towards this goal leads from conventional telephony networks to Asynchronous Transfer Mode (ATM) networks. Another line of technological development towards the same goal leads from Local Area Networks (LANs) to groups of LANs connected by long-distance lines and routing elements - i.e. an Internet Protocol (IP) network. Both types of network involve traffic flows being arranged into one or more packets for transmission across the network.

An ATM network provides a so-called connection-oriented service to all traffic flows that are routed across it. To provide such a service requires each of those traffic flows to be preceded by a connection set-up phase involving the passing of signalling messages from the sender to the recipient and back again. One subsequent benefit of this signalling phase is that the packets need not carry a unique destination address (in a large network there are necessarily a large number of these). Instead, each packet need only identify the connection to which it relates. Networks which route packets on the basis of a connection identifier rather than a unique destination address are known as label-switched networks.

However, for some types of traffic flows (especially short-lived ones) the delay in communication caused by the connection set-up phase of label-switched networks is burdensome. For such flows, datagram networks are able to provide a connectionless service. In datagram networks packets include the unique destination address of the intended recipient. Hence, each datagram can be routed without a connection set-up phase having taken place. However, a disadvantage of not having a connection set-up phase is that it is not possible to deny service to users during such a phase in order to prevent the network becoming congested. This makes congestion control in datagram networks haphazard, and, in practice, congestion is found to result in indiscriminate degradation in the service provided to users.

According to the present invention, there is provided a method of operating a datagram network node, said method comprising the steps of:

receiving a plurality of datagrams, some of said datagrams carrying components of flows, others comprising an indication that they are flow precursor datagrams;

identifying a datagram as a flow precursor datagram on the basis of said indication;

examining a congestion indication which indicates whether congestion is present in said datagram network; and

on said congestion indication indicating the presence of congestion in said datagram network, forwarding said flow component datagrams in preference to said flow precursor datagrams.

By delaying or discarding flow precursor datagrams at times of congestion in the network, the additional congestion that would result from the introduction into the network of the flows which they precede is avoided. Furthermore, congestion control is achieved without reducing the quality of the service provided to flows that have already been introduced to the network.

In preferred embodiments, the method further comprises the step of generating said congestion indication in response to congestion at said network node. This has the advantage of only denying or delaying service to flows which will add traffic to the network at points where it is congested. The method is of even more focussed application when the congestion indication reflects a measurement of the amount of traffic currently queuing for the output link over which said flow is to be forwarded.

In some embodiments the preference for forwarding flow component datagrams results from one or more flow precursor datagrams being discarded. In other embodiments, the flow precursor datagrams are delayed at the network node relative to flow component datagrams and forwarded once the congestion in the network has subsided.

Other aspects of the present invention are set out in the attached claims.

There now follows a description of specific embodiments of the present invention. These embodiments are presented by way of example only, and described with reference to the accompanying figures in which:

Figure 1 is a diagram of a communications internetwork which is operable in accordance with embodiments of the present invention;

Figure 2 is a diagram of an Internet Protocol (IP) datagram carrying a Transmission Control Protocol (TCP) Transport Protocol Data Unit (TPDU) as its payload;

Figure 3 is a flow chart illustrating the process carried out by a router in the communications internetwork of Figure 1 when that internetwork is arranged to operate in accordance with a first embodiment of the present invention; and

Figure 4 is a flow chart illustrating the process carried out by a router in the communications internetwork of Figure 1 when that internetwork is arranged to operate in accordance with a second embodiment of the present invention.

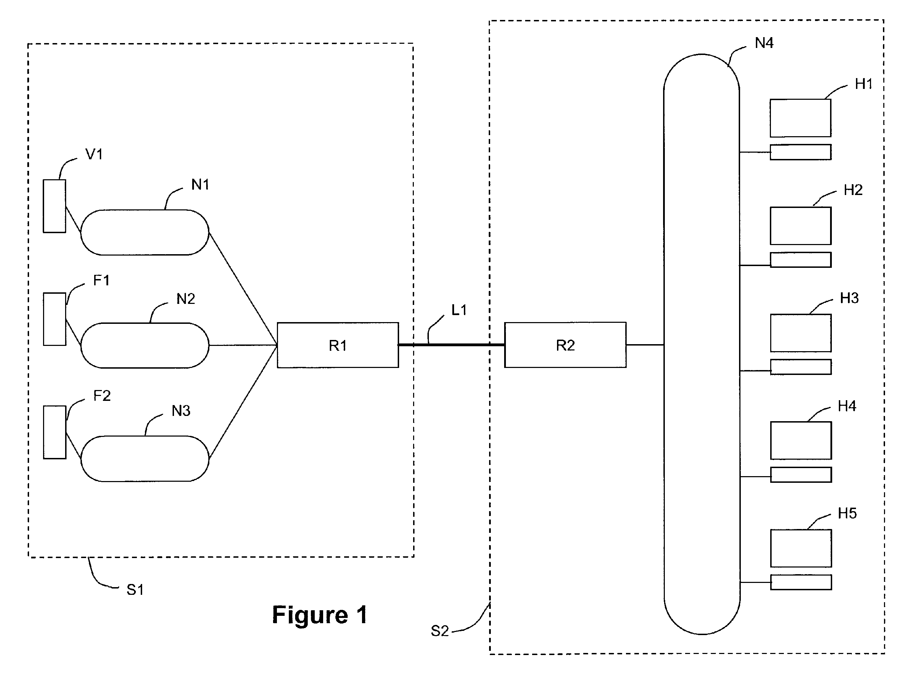

A communication internetwork (Figure 1) spans two geographically distant sites (S1,S2). Communications traffic between the two sites (S1,S2) is carried over an optical fibre L1 in accordance with the Synchronous Digital Hierarchy (SDH) standards of the International Telecommunications Union (ITU). The traffic is transmitted over the link L1 at a rate of 50 Mbps (Megabits per second).

Each end of the link L1 is connected to a site router (R1,R2). The site routers are Internet Protocol routers provided by Cisco Systems Inc., San Jose, California, USA, whose operating system programs have been altered in order to cause the routers to carry out the additional processes described below. Those skilled in the art will be able to write a suitable operating system program.

The first site S1 has three local area networks (LANs) (N1, N2, N3) which are directly connected to the first site router R1.

The first LAN N1 comprises an IEEE 802.3 Local Area Network which operates to carry traffic at 10Mbps. A video-handling computer V1 is attached to the network. Video server software is installed in the video-handling computer V1. That software is executable to cause a stream of video data to be forwarded to a remote computer in accordance with a request received from that remote computer. The video server software makes use of library routines to output the video data to the LAN in a way that accords with the TCP/IP protocol suite. Each stream of video data is sent at 4 Mbps.

The second and third LANs N2, N3 operate in accordance with the IEEE 802.3u standard and hence are operable to carry data at 100Mbps. Those LANs N2, N3 are connected to respective file-handling computers F1, F2. File server software is installed in each of the file-handling computers. That software is executable to cause a stream of file data to be forwarded to a remote computer in accordance with a request received from that remote computer. The file server software makes use of library routines to output the file data to the LAN in a way that accords with the TCP/IP protocol suite. Each stream of file data is sent at 20Mbps.

The second site S2 has a single LAN N4 which operates in accordance with the IEEE 802.3u standard and hence is operable to carry traffic at 100Mbps. Five personal computers (H1 to H5) and the second site router R2 are attached to the LAN N4. Each of the computers (H1 to H5) is provided with application software that enables the user to operate input devices attached thereto (mouse, keyboard etc.) to request video data from the video-handling computer V1 and data files from the file-handling computers (F1,F2). Suitable application software is the RealPlayer program provided by RealNetworks, Inc., Seattle, WA 98121, USA and the Internet Explorer browser program provided by Microsoft Inc., Redmond, WA 98052, USA.

The TCP/IP code in each of the video and file-handling computers F1, F2, V1 is conventional in that it includes transport layer code and network layer code. In the present implementation, the transport layer code produces a DATAGRAM TYPE parameter to be used by the network layer code.

In accordance with the first embodiment of the present invention, the code which implements the TCP/IP protocol suite is amended to produce IP datagrams whose header differs in one respect from conventional IP datagrams.

The network layer code is executable to set the 49$^{th}$ bit of the IP protocol header (a bit whose use has not yet been standardised by the Internet Engineering Task Force) in response to the value of the DATAGRAM TYPE parameter. If the DATAGRAM TYPE parameter indicates that the Transport Protocol Data Unit carried in the datagram is an indication to a remote computer that a TCP connection between that computer and the video-handling or file-handling computer F1, F2, V1 is accepted then the 49$^{th}$ bit is given the value 1. Otherwise it is given the value 0.

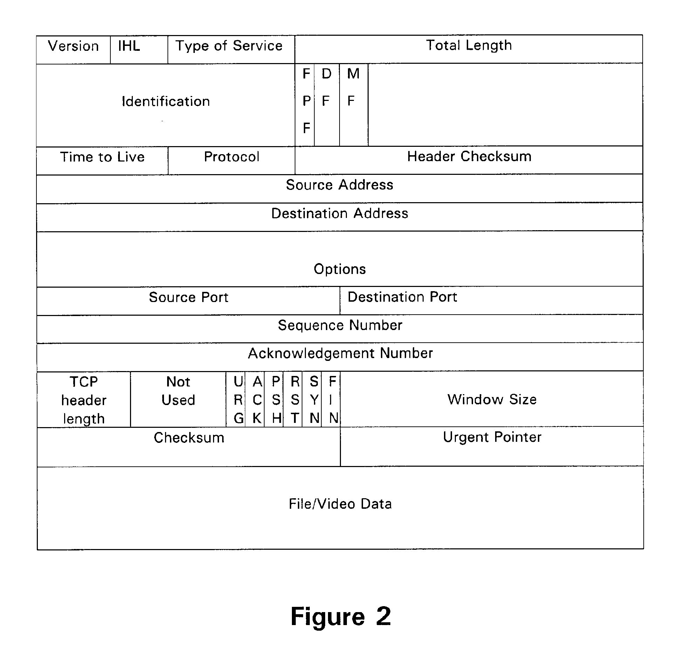

The resulting format of the IP datagram header is shown in Figure 2. Those skilled in the art will understand that each row in Figure 2 represents 32-bits. It will be seen that the format is conventional save for the presence of a Flow Precursor Flag (FPF) at the 49$^{th}$ bit in the header.

The code controlling the router R1 is also mostly conventional. However, some additional processing takes place in accordance with the present embodiment.

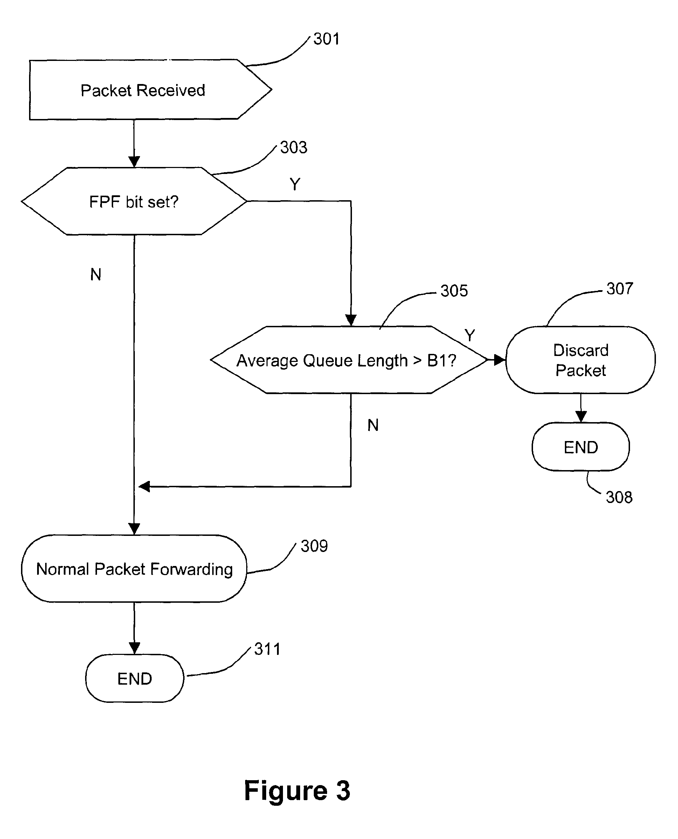

Referring to Figure 3, each time an IP datagram is received (step 301) at router R1, a test (step 303) is carried out to find whether the FPF flag in the received IP datagram is equal to one. Those skilled in the art will realise that this test can be carried out using a simple masking operation which does not require much processor time and hence has little impact on performance. If the FPF bit is equal to zero, the datagram is forwarded in the normal manner (step 309). However, if the FPF bit is equal to one, then a further test (step 305) is carried out to find whether the occupancy of the output buffer associated with the link L1 is greater than a threshold B1. An average queue length is used as a measure of the occupancy of the buffer. This value is calculated using a moving average low-pass filter. In mathematical terms:

$$average\_queue\_length \leftarrow \left(1 - w_q\right) average\_queue\_length + w_q q$$

Those skilled in the art will be able to set $w_q$ to a value that does not reflect increases in queue length that are transient but which does reflect increases in queue length that are persistent and indicate that congestion is present.

Efficient implementations of the calculation of the average queue length are presented in Sally Floyd, Van Jacobsen, 'Random Early Detection Gateways for Congestion Avoidance', ACM Transactions on Networking, August 1993.

If the average queue length is less than the predetermined threshold, the datagram is forwarded normally (step 309). Otherwise, the datagram is simply discarded (step 307).

An example of the performance of the internetwork of Figure 1 in accordance with the present embodiment of the invention will now be given.

The personal computers H1 and H2 are operating under control of the Internet Explorer browser program mentioned above. The users of those computers H1, H2 simultaneously interact with their respective computers to request data files from respective file-handling computers F1, F2. Each of those files is 4MB (megabytes) in length. In response to those requests each file-handling computer sends an IP datagram containing a TCP TPDU that indicates that the file-handling computer accepts the TCP connection request from the personal computer. The modified TCP/IP code running on the file-handling computers causes the 49th bit of the IP header to be set to 1.

The router R1, on receiving the TCP connection acceptance datagrams from the file-handling computers, finds, in each case, (step 303) that the FPF bit is set to 1 and hence carries out the buffer occupancy test (step 305). The threshold B1 is set sufficiently high that, even in relation to the second of the two TCP connection acceptance datagrams to arrive at the router R1, the buffer occupancy is found to be below the threshold B1. Hence, both TCP connection acceptance datagrams are forwarded normally (step 309). The personal computers receive the TCP connection acceptance datagrams and send acknowledgement datagrams in reply to the file-handling computers F1, F2. Once those datagrams have been received and processed by the file-handling computers F1, F2, those computers forward data to the personal computers H1, H2 at an average rate of 20Mbps across the LANs N2, N3.

Data therefore arrives at the router R1 at an average rate of 40Mbps. This results in the buffer threshold B1 being exceeded.

At the moment the two file transfers begin, the computer H5 is operating under control of the RealPlayer program. The user of personal computer H5 interacts with his or her computer to request a video data stream from the video-handling computer V1. The RealPlayer program uses the conventional library of TCP/IP routines present in the personal computer to generate a TCP connection request datagram in accordance with the TCP/IP protocol suite. This datagram is forwarded to the video-handling computer V1 which finds it is able to meet the request and hence responds with a TCP connection acceptance datagram. The video-handling computer agrees to those requests and uses the modified TCP/IP code described above to generate a TCP connection acceptance datagram which has its 49th bit (the FPF bit) set to 1.

The router R1, on receiving the TCP connection acceptance datagram from the video-handling computer, finds (step 303) that the FPF bit is set to 1 and hence carries out the buffer occupancy test (step 305). In this case, the average queue length is found to be greater than the threshold B1. Hence, the TCP connection acceptance datagram is discarded (step 307). The personal computer H5 does not receive a TCP connection acceptance datagram and hence re-sends the TCP connection request datagram around six seconds later. No video data is transferred from the video-handling computer V1 to the personal computer H5 across the internetwork (Figure 1) during those six seconds.

In the meantime, the two file transfers complete in around 1.6 seconds. When the personal computer H5 makes its second attempt to connect with the video-handling computer V1, the output buffer associated with the link L1 is empty, hence the average queue length is less than the threshold B1 and the TCP connection acceptance datagram from the video-handling computer is forwarded normally. The video traffic will then be forwarded across the internetwork (Figure 1).

It will be seen how the above embodiment prevents congestion in the internetwork (Figure 1) by preventing the establishment of a flow across it when it is heavily loaded.

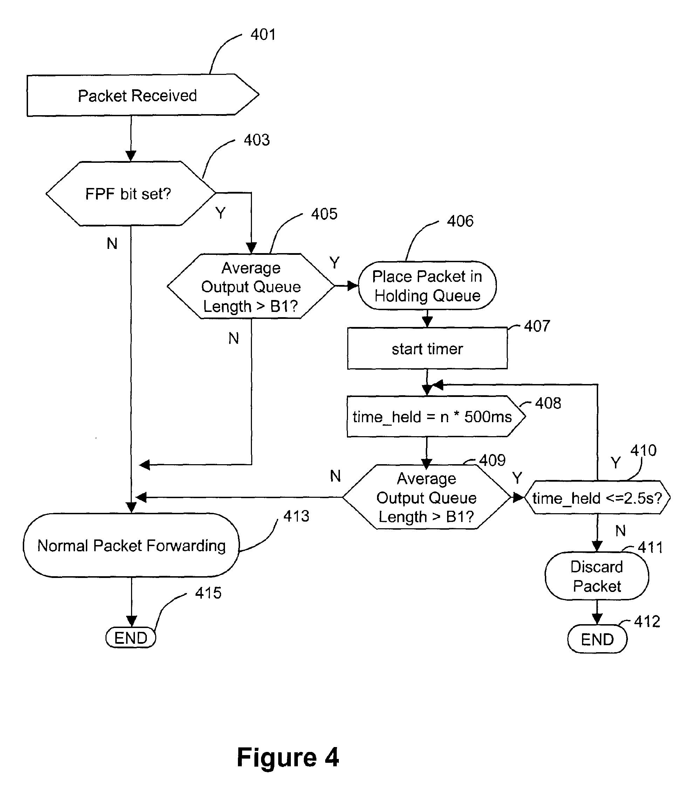

A second embodiment of the present invention is similar to the first embodiment, save for the router R1 being provided with further additional code as shown in Figure 4 and amendments being made to the network software in the personal computer H5.

In the above-described first embodiment, the personal computer H5 was controlled by the RealPlayer program to set up a TCP connection across the internetwork (Figure 1). In this second embodiment, the user has configured the RealPlayer program to send and receive packets according to the User Datagram Protocol (UDP) (a connectionless transport protocol) rather than TCP. Users of the RealPlayer program will know that the program provides an interface that allows the user to choose between UDP transport and TCP transport.

The code providing the UDP functionality of the personal computer is amended to pass a DATAGRAM-TYPE parameter for use by the network layer code. The personal computer operating under control of the RealPlayer program and the video-handling computer communicate in accordance with the Real-Time Streaming Protocol. Those skilled in the art will realise that this means that prior to the transmission of video data across the network the personal computer outputs a message containing a text message such as:

SETUP rtsp://video.bt.com/surftime

In addition to causing the production of such a request, the RealPlayer program in the personal computer H5 is amended to generate a DATAGRAM-TYPE parameter for use by the transport layer code. That DATAGRAM-TYPE parameter indicates that the datagram represents a request for a data flow - the DATAGRAM-TYPE parameter is also used by the network layer code to cause the request to be encapsulated in an IP datagram which has its 49th bit set to 1.

The operation of the router R1 in this second embodiment is shown in Figure 4.

As in the first embodiment, the router checks (step 403) each incoming datagram to find whether the FPF bit is set. If it is not, then the datagram is forwarded normally (step 413). If the FPF bit is set, then (again as in the first embodiment) a test (step 405) is carried out to find whether the average queue length for the output link L1 is greater than a predetermined threshold B1. If it is not, then the datagram is forwarded normally (step 413).

If the average queue length does exceed the predetermined threshold then the datagram is placed in a 'holding queue' (step 406). At 500ms intervals thereafter (steps 407, 408) it is found (step 409) whether the average length of the queue for the output to L1 is greater than the predetermined threshold B1. (Note that, although the two queue length tests (steps 405, 409) are shown separately, in practice the same code is run for each). If the later test (step 409) finds the average length of the output queue to link L1 to be less than the threshold B1 then the datagram is forwarded normally (step 413) - i.e. the datagram is transferred from the holding queue to the output queue for the network N1.

If the later test (step 409) finds the average length of the output queue for link L1 is higher than the threshold B1 then the datagram remains in the holding queue unless it has already been held there for more than 2.5s. If it has been held in the holding queue for that long then it is discarded (step 411).

Given the same set of network traffic described above in the example of the performance of the first embodiment of the present invention, the second embodiment will function in a similar way save in the following respects.

The modified RealPlayer program together with the modified network software results in the datagram containing the request for a video flow having its 49th bit set to 1.

On receiving the datagram, the router R1 will investigate whether the average length of the queue for link L1 exceeds the predetermined threshold. As described in relation to the first embodiment, that threshold will be exceeded because of the two file transfers taking place at the same time.

The RTSP request datagram will therefore be stored in a holding queue. After 0.5s, 1.0s, and 1.5s the two 4Mbyte (=32Mbits) file transfers will still be in progress, so the respective average output queue length tests (step 409) will all find that the threshold B1 is exceeded. When the test (step 409) is carried out for the fourth time (when the timer indicates 2.0s), the average queue length will have fallen below the threshold B1 because the two file transfers have finished. Hence, the RTSP request datagram is placed in the output queue for the network N1 and forwarded normally (step 413).

It will be seen how the second embodiment provides the performance improvements offered by the first embodiment and furthermore reduces the delay in setting up the flow of the video datagrams across the internetwork (from 6s to 2s in the present example).

The example of the operation of the first embodiment showed how the introduction of a new flow was stopped by preventing the setting up of a TCP connection. In particular, the IP packet carrying the TCP connection acceptance (i.e. the reply to the initial TCP connection request) was identified. Such an arrangement advantageously requires only the network software in the three video and file-handling computers to be modified - this being simpler and cheaper than modifying the network software in all five of the personal computers.

In the second embodiment, the video flow would be transmitted on receipt of a request for the video flow - no TCP connection is set-up. In flows which only involve the provision of a flow in response to a request, then the request rather than the response must be intercepted in order to prevent the introduction of the new flow (i.e. the response) to the network. Normally, the response would add to the traffic present on the link on which the request is received, In some embodiments (e.g. that shown in Figure 1) the layout of the network means that the output queue that should be monitored for congestion would be obvious to the network operator. In those cases, the network operator can configure the router to take account of the presence of congestion on that link irrespective of the type of flow precursor datagram received. In other network arrangements, two bits could be added to the datagram header. The first would indicate that the datagram was a flow precursor datagram, the second would indicate whether the flow itself was to be expected in the same direction as the flow precursor datagram or the opposite direction.

There are many other possible embodiments of the present invention. Features of other embodiments might include:

i) the routers R1 and R2 to analyse the transport layer header of datagrams passing through them and, at times of congestion, delete or delay those having the SYN bit and/or the ACK bit set (this could be done by a masking operation). However, datagrams having encrypted payloads would then be discarded at random; and/or

ii) a greater number of bits in the IP header could be used to indicate both that the datagram relates to flow establishment and also give an indication of the size of the flow.

## Claims

1. A method of operating datagram network node apparatus, said method comprising the steps of:

   receiving a plurality of datagrams, some of said datagrams carrying components of flows, others comprising an indication that they are precursors to flows;

   identifying a datagram as a flow precursor datagram on the basis of said indication;

   examining a congestion indication which indicates whether congestion is present in said datagram network; and

   on said congestion indication indicating the presence of congestion in said datagram network, forwarding said flow component datagrams in preference to said flow precursor datagrams.

2. A method according to claim 1 further comprising the step of generating said congestion indication in response to congestion at said network node.

3. A method according to claim 2 wherein said congestion indication generation step comprises measuring the amount of traffic currently queued at said network node.

4. A method according to claim 3 wherein said traffic measurement step comprises measuring the amount of traffic currently queuing for the output link over which said flow is to be forwarded.

5. A method according to claim 1 further comprising the steps of:

   storing said flow precursor datagram on said congestion indication indicating the presence of congestion in said network;

   whilst said flow precursor datagram is stored, examining an updated congestion indication; and

   decreasing the preference for forwarding flow component datagrams instead of said flow precursor datagrams on said updated congestion indication indicating that the congestion in said network has subsided.

6. A method according to any preceding claim in which said datagram network node operates substantially in accordance with the IP protocol suite.

7. A method of operating a datagram network comprising at least two terminal nodes connected via communications links to a subnetwork comprising one or more nodes and communications links therebetween, said method comprising the steps of:

   operating one or both of said terminal nodes to generate one or more flow precursor datagrams containing an indication that they are precursors to the introduction of a flow to the subnetwork and to forward said datagrams to said subnetwork;

operating one or more switching nodes in said subnetwork in accordance with the method of any one of claims 1 to 6.

8. A method according to claim 7 wherein said terminal nodes comprise a client terminal node and a server terminal node, said flow precursor datagram generation step comprising operating said server terminal node to generate a connection acceptance datagram which includes said indication.

9. Datagram network node apparatus comprising:

one or more input ports for receiving datagrams, some of which comprise components of flows through said node, others of which comprise an indication that they are a precursor to one or more flows;

one or more output ports for forwarding datagrams;

means arranged in operation to identify a datagram as a flow precursor datagram on the basis of said indication;

means arranged in operation to examine an congestion indication which indicates whether or not congestion is present in said datagram network; and

scheduling means arranged in operation to forward said flow component datagrams in preference to flow precursor datagrams on said congestion indication indicating the presence of congestion in said datagram network.

10. Datagram network node apparatus comprising:

one or more input ports for receiving a plurality of datagrams, some of said datagrams carrying components of flows, others comprising an indication that they are flow precursor datagrams;

one or more output ports for forwarding datagrams;

first memory arranged in operation to store datagrams awaiting forwarding from said datagram node apparatus;

second memory arranged in operation to store a congestion indication indicating whether or not congestion is present in said datagram network;

third memory storing code;

a processor in communication with said first, second and third memory;

wherein said code is executable by the processor to:

identify a datagram, received over one of said interfaces and stored in said first memory, as a flow precursor datagram on the basis of said indication contained within said datagram;

occasionally examine said congestion indication; and

forward flow component datagrams in preference to said flow precursor datagrams on said congestion indication indicating that congestion is present in said network.

11. A program of instructions executable by network node apparatus having a plurality of physical interfaces over which datagrams can be forwarded and/or received, first memory arranged in operation to store datagrams awaiting forwarding from said datagram node apparatus, second memory arranged in operation to store a congestion indication indicating whether or not congestion is present in said datagram network, said program of instructions being executable to:

identify a datagram, received over one of said interfaces and stored in said first memory, as a flow precursor datagram on the basis of an indication contained within said datagram;

occasionally examine said congestion indication; and

forward datagrams carrying components of flows in preference to those identified as flow precursor datagrams from said network node apparatus on said congestion indication indicating that congestion is present in said network.

**12.** A computer readable medium storing a program according to claim 11.

**13.** A computer arranged in operation to generate datagrams having a network layer portion including an indication as to whether the datagram relates to the establishment of a connection between a process executable by said computer and a process executable by another computer connected to the computer by a datagram communications network.

**14.** A computer program executable by a computer to cause said computer to generate datagrams having a network layer portion including an indication as to whether the datagram relates to the establishment of a connection between a process executable by said computer and a process executable by another computer connected to the computer by a datagram communications network.

**15.** A computer readable medium storing a computer program according to claim 14.

**16.** A communications network comprising one or more computers according to claim 13 in communication with one or more network nodes according to claim 10.

Figure 1

| Version | IHL | Type of Service | | | Total Length | | | |
|---|---|---|---|---|---|---|---|---|
| Identification | | | FPF | DF | MF | | | |
| Time to Live | | Protocol | | | Header Checksum | | | |
| Source Address | | | | | | | | |
| Destination Address | | | | | | | | |
| Options | | | | | | | | |
| Source Port | | | | Destination Port | | | | |
| Sequence Number | | | | | | | | |
| Acknowledgement Number | | | | | | | | |
| TCP header length | Not Used | URG | ACK | PSH | RST | SYN | FIN | Window Size |
| Checksum | | | | | | | Urgent Pointer | |
| File/Video Data | | | | | | | | |

# Figure 2

_301_

Packet Received

_303_

FPF bit set? — Y

N

_305_

Average Queue Length > B1? — Y

N

_307_

Discard Packet

END

_308_

Normal Packet Forwarding

_309_

END

_311_

**Figure 3**

Packet Received — 401

FPF bit set? — 403

Y

N

Average Output Queue Length > B1? — 405

Y

N

Place Packet in Holding Queue — 406

start timer — 407

time_held = n * 500ms — 408

Average Output Queue Length > B1? — 409

N

Y

time_held <=2.5s? — 410

Y

N

Normal Packet Forwarding — 413

Discard Packet — 411

END — 415

END — 412

**Figure 4**

**European Patent Office**

## EUROPEAN SEARCH REPORT

Application Number

EP 00 30 2444

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>A | EP 0 932 282 A (NORTEL NETWORKS CORP) 28 July 1999 (1999-07-28)<br>* figures 1,2A,4A,4B *<br>* abstract *<br>* column 1, line 54 - column 2, line 2 *<br>* column 3, line 39 - line 46 *<br>* column 3, line 56 - column 4, line 12 *<br>* column 5, line 21 - line 23 *<br>* column 6, line 20 - line 30 *<br>* claim 1 * | 1,2,5,6,<br>9-12<br>7,13-16 | H04L12/56 |
| A | CHEON K ET AL: "Early selective packet discard for alternating resource access of TCP over ATM-UBR"<br>PROCEEDINGS. 22ND ANNUAL CONFERENCE ON LOCAL COMPUTER NETWORKS. LCN'97 (CAT. NO.97TB100179), PROCEEDINGS OF 22ND ANNUAL CONFERENCE ON LOCAL COMPUTER NETWORKS, MINNEAPOLIS, MN, USA, 2-5 NOV. 1997,<br>    pages 306-316, XP002146200<br>1997, Los Alamitos, CA, USA, IEEE Comput. Soc, USA<br>ISBN: 0-8186-8141-1<br>* page 306, column 2, line 17 - line 21 *<br>* page 307, column 2, line 1 - line 14 *<br>* page 309, column 1, line 1 - column 2, line 42 * | 1-4,6,7,<br>9 | TECHNICAL FIELDS SEARCHED (Int.Cl.7)<br><br>H04L |

The present search report has been drawn up for all claims

| Place of search | Date of completion of the search | Examiner |
|---|---|---|
| THE HAGUE | 30 August 2000 | Lamadie, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 30 2444

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2000

| Patent document cited in search report | Publication date | Patent family member(s) | Publication date |
|---|---|---|---|
| EP 0932282 A | 28-07-1999 | NONE | |

EPO FORM P0459

For more details about this annex : see Official Journal of the European Patent Office, No. 12/82